# EUROPÄISCHE PATENTSCHRIFT

(11) **EP 0 914 272 B1**
(45) Veröffentlichungstag und Bekanntmachung des Hinweises auf die Patenterteilung: **26.01.2005**
(21) Anmeldenummer: 97941785.4
(22) Anmeldetag: 01.08.1997
(51) Int. Cl.: H02K 7/18, B62J 6/12

(54) **ENERGIEWANDLERSYSTEM IN ODER AN EINER RADNABE**
ENERGY CONVERSION SYSTEM PROVIDED IN OR AT A WHEEL HUB
SYSTEME CONVERTISSEUR D'ENERGIE ARRANGE A OU DANS UN MOYEU DE ROUE

(30) Priorität: 01.08.1996 DE 19632391
(43) Veröffentlichungstag der Anmeldung: 12.05.1999
(73) Patentinhaber: HILL, Wolfgang, 76135 Karlsruhe (DE)
(72) Erfinder: HILL, Wolfgang, 76135 Karlsruhe (DE)
(86) Internationale Anmeldenummer: PCT/DE1997/001670
(87) Internationale Veröffentlichungsnummer: WO 1998/005547

(56) Entgegenhaltungen:
- WO-A-95/18739
- DE-A- 4 035 765
- DE-A- 4 234 388
- DE-A- 4 314 290
- GB-A- 2 266 418
- US-A- 4 761 577

## Beschreibung

Die Erfindung betrifft ein Energiewandlersystem in einer Radnabe und ein Verfahren zu dessen Betrieb.

Aus der DE-A-43 14290 ist ein Energie wandler system bekannt, wobei das Energiewandlersystem aus einem Generator, einer Elektronik und einem Energiespeicher besteht, und der Generator als geschaltete Reluktanzmaschine (2, 22) ausgebildet ist. Dieses Dokument beschreibt auch ein Verfahren Zum Beaufschlagen der Reluktanzmachine mit Erreger pulsen.

Aus der ***DE 30 43 269 A1*** ist ein Seitendynamo für Fahrräder bekannt, der sich durch die Integration der Ansteuerelektronik und eines Akkumulators in das Dynamogehäuse auszeichnet. Das Ein- und Ausschalten des Dynamos erfolgt manuell über die Bewegung des Reibrades. Der mechanische Zu- und Abschalter des Dynamos ist erforderlich, da der Dynamo im Leerlauf Verluste erzeugt. Der Umformer zwischen dem Stromerzeuger und dem Akkumulator ist als Diodenschaltung ausgebildet.

Aus der ***DE-PS 933 040*** ist bekannt, eine als Generator betriebene Gleichpolmaschine als Außenläufer ausgebildet ohne Getriebe in der Radnabe eines Fahr- und Krafträdes anzuordnen. Bei der Gleichpolmaschine handelt es sich um eine fremderregte Maschine, wobei das erregende Magnetfeld vorteilhaft von Permanentmagneten erzeugt wird. Die Permanentmagneterregung verursacht jedoch ein starkes Rastmoment.

In der ***DE 43 17 817 C1*** wird eine Drehstromlichtmaschine mit Permanentmagneten im Rotor beschrieben, deren Stator aus drei versetzt zueinander angeordneten Induktionsspulen mit Polfingerkäfigen aus Weicheisen besteht. Die elektrische Maschine soll als Ladegenerator ständig mitlaufen. Allerdings erzeugen die Permanentmagnete spürbare Ummagnetisierungsverluste in den ungeblechten Polfingern des Stators.

Aus der ***DE 44 11 145 A1*** ist ebenfalls ein Generator mit baugleichen Induktionsspulen bekannt, die allerdings keinen Phasenversatz aufweisen und zur Erhöhung der Betriebssicherheit parallelgeschaltet sind. Der Rotor mit den Permanentmagneten ist direkt mit dem Rad verbunden. Um bei niedrigen Drehzahlen bereits eine für die Beleuchtung ausreichende Leistung zu erzeugen, weist der Generator ein erhebliches Gewicht und Volumen auf. Weiterhin entstehen auch in dieser Ausführungsform permanent Ummagnetisierungsverluste im Statoreisen.

Ein kleineres Bauvolumen wird durch ein Übersetzungsgetriebe erreicht, das die Drehzahl erhöht. Getriebegeneratoren in der Radnabe sind aus der ***JP 3-258 673A*** oder der ***EP0528 347 A1*** bekannt. Planetengetriebe sind aber teuer und erhöhen den Betriebswiderstand zusätzlich.

Eine weitere bekannte Alternative stellen Generatoren mit eisenloser Wicklung in der Radnabe dar, wie sie in der ***DE 37 03 523 C2*** (DC-Scheibenläufer), der ***DE 39 18 166 C2*** (EC-Scheibenläufer) oder der ***DE 42 34 388 A1*** beschrieben werden. Eisenlose Wicklungen vergrößern den magnetisch wirksamen Luftspalt und führen damit zu hohen Magnetkosten. Ebenfalls mit Permanentmagneten ist ein bürstenloser, einphasiger Außenläufer gemäß der ***DE 42 32 182 A1*** ausgestattet, bei dem die Leerlaufverluste im Eisen- durch eine Verdrehung von zwei Magnetringen zueinander vermindert werden sollen. Die Leerlaufverluste sind sonst nur vermeidbar, indem der Rotor mechanisch vom Rad getrennt wird.

Eine Verringerung des Gewichts ist durch eine Erhöhung des Generatordurchmessers in der Radnabe erreichbar. Bauformen hierzu sind u.a. aus der ***DE-OS 27 27 827,*** der ***DE* 42 29 457 *A1*** oder der ***DE 42 29 261 C1*** bekannt. Nachteilig sind hierbei der geringe Schutzgrad und die hohen Magnetkosten.

In der ***DE 42 29 261 C1*** wird der Generator so leistungsstark ausgelegt, daß er auch im Motorbetrieb eine nennenswerten Beitrag zur Antriebsleistung erbringen kann. Für den Motorbetrieb ist hierzu ein Akkumulator vorgesehen, der am Fahrradrahmen angeordnet wird. Dieses System ist für normale Beleuchtungszwecke zu schwer und zu teuer.

Aus der ***DE 44 47 159 A1*** ist eine Transversalflußmaschine mit einer speziellen Luftspaltanordnung bekannt, die auch als geschalteten Reluktanzmaschine ausgeführt ist. Der weichmagnetische Körper besteht aus einer Vielzahl von Segmenten aus geschichteten Elektroblechen, was einen hohen Montageaufwand verursacht. In einer in der Radnabe integrierten Ausführungsform weist der Rotor Permanetmagnete auf.

Der Erfindung liegt die Aufgabe zugrunde, einen in der Radnabe integrierten Energiewandlersystem derart weiterzuentwickeln, daß bei niedrigen Herstellungskosten ein kleines Bauvolumen und Gewicht, eine hohe Effizienz und eine sichere Stromversorgung in allen Betriebsbereichen erreicht wird.

Diese Aufgabe wird durch die in den Ansprüchen wiedergegebene Erfindung gelöst.

Erfindungsgemäß besteht das Energiewandlersystem aus einem in oder an der Radnabe angeordneten Reluktanzgenerator, einer Ansteuerelektronik und einem elektrischen Energiespeicher. Die Ansteuerelektronik regelt die Generatorleistung in Abhängigkeit des Ladezustandes der Batterie, der Drehzahl und dem aktuellen Energiebedarf. Hierbei wird die aus dem Energiespeicher bezogene Erregerenergie so eingestellt, daß, solange der Energiebedarf und der Ladezustand es erfordern, die entsprechend der Drehzahl optimale Energiemenge im Generator umgesetzt wird. Ein Fuzzy-Regler ermöglicht bei sinkendem Ladezustand einen nahezu kontinuierlichen Übergang von einem Betrieb mit minimalen Verlusten zum Betrieb mit maximaler Energieausbeute.

Die Betriebsführung des Wandlersystems ist bestrebt, den Energiespeicher möglichst mit Entladezyklen geringer Tiefe nahe am Volladezustand zu betreiben. Als Energiespeicher eignen sich hierzu vorzugsweise Lithium-Akkumulatoren oder Kondensatoren mit hoher Energiedichte. Wenn als Verbraucher nur Lichtquellen vorhanden sind und deren Betriebszeit durch Fotosen soren gesteuert wird, führt dieser automatische Betrieb zu einer nahezu vollständigen Entlastung des Fahrers und zu einer Verbesserung der Betriebssicherheit des Fahrzeuges.

Vorzugsweise sind auch die Elektronik und der Energiespeicher ebenfalls in oder an der Radnabe eines muskelbetriebenen Fahrzeuges angeordnet. Dies erleichtert die Montage, verringert die Störanfälligkeit und vermindert die EMV-Probleme.

Neben den Vorzügen der gleichmäßigen Energieversorgung der Verbraucher unabhängig von der Fahrgeschwindigkeit sowie der Möglichkeit für eine bestimmte Zeit nach dem Anhalten oder generell eine Standbeleuchtung zu realisieren, besteht durch die Nutzung eines Energiespeichers der wesentliche Vorteil in einer deutlichen Reduktion der Generatormasse. Im Gegensatz zu Wandlersystemen ohne Energiespeicher muß der Nabengenerator seine Nennleistung nicht bei einer Minimalgeschwindigkeit (z.B. 6km/h) erzeugen können, sondern es reicht aus, wenn er die Nennleistung bei der ca. 3-fach höheren Durchschnittsgeschwindigkeit (18 km/h) erzeugen kann. Hierdurch wird die Reluktanzmaschine deutlich kleiner und preisgünstiger.

Bei niedrigem Energieverbrauch und vollem Energiespeicher bleibt die Reluktanzmaschine unerregt, und im Wandlersystem entstehen nahezu keine Verluste.

Zusammenfassend zeichnet sich das erfindungsgemäße Energiewandlersytem gegenüber dem Stand der Technik durch
- kompakte, leichte Bauform,
- preiswerte Herstellung,
- vemachlässigbare Leerlaufverluste,
- Einsparung der Magnetkosten,
- hohe Versorgungssicherheit,
- integrierte Standlichtoption,
und einfache Montage und Bedienung aus.

Weiterhin kann der Energiespeicher bei erhöhtem Energiebedarf z.B. im Winter durch externe Energiezufuhr geladen und so der Fahrwiderstand reduziert werden.

In den Zeichnungen sind zwei vorteilhafte Ausführungsform der Erfindung dargestellt.
- ***Fig. 1***: zeigt ein Energiewandlersystem in der Radnabe mit Akkumulatoren,
- ***Fig.* 2**: zeigt zwei Schnitte gemäß den Linien A-A und B-B in Fig. 1,
- ***Fig.* 3**: zeigt ein Energiewandlersystem in der Radnabe mit einem Kondensator,
- ***Fig. 4***: zeigt zwei Schnitte gemäß den Linien A-A und B-B in Fig. 3.

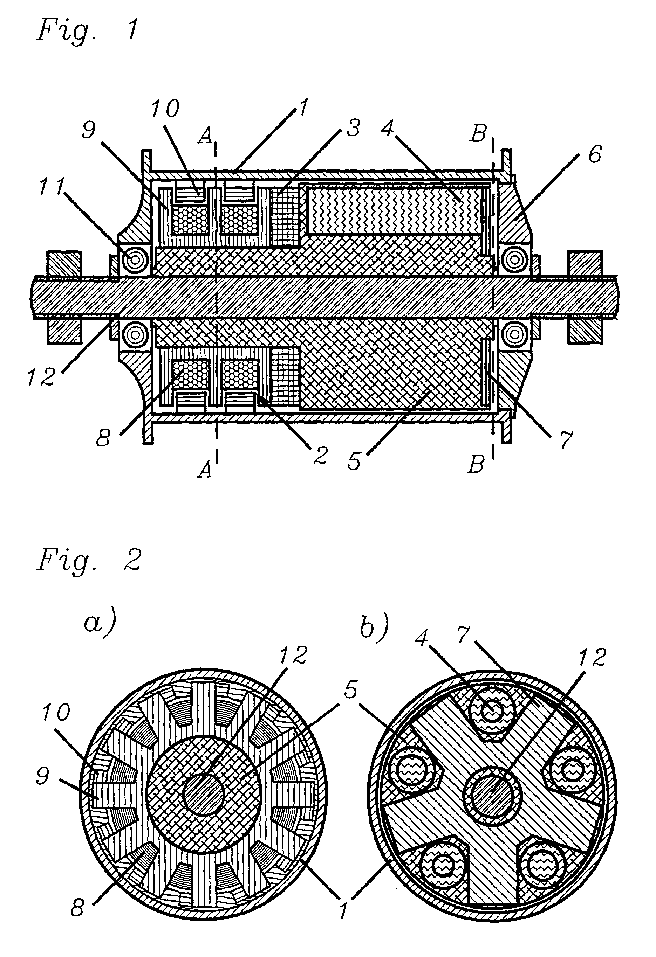

***Fig. 1*** zeigt einen in der Radnabe **1** integrierten zweiphasigen Reluktanzgenerator **2**, der über eine Elektronik **3** mit einem Energiespeicher **4** verbunden ist. Dieser besteht aus fünf Akkumulatorzellen, die in einem Spritzguß-Aluminiumkörper **5** liegen. Nach dem Öffnen des Nabendeckels **6** und dem Verdrehen der Kontaktscheibe **7** können die Akkumulatorzellen ausgewechselt werden. Der Reluktanzgenerator **2** besteht aus zwei Leiterringen **8**, die von drei Seiten von einem aus drei bis fünf Teilen bestehenden weichmagnetischen Körper **9** umgeben werden. Dieser wird als Eisenpulverpreßteil oder Sintermaterial hergestellt. Die den magnetischen Kreis periodisch schließenden weichmagnetischen Rotorsegmente **10** sind in zwei Ringen eingegossen, die an der Radnabe **1** tangential fest aber axialbeweglich befestigt sind. Gleitanlaufringe sichern die Position der Rotorringe gegenüber dem Stator, wobei die Radnabe im Normalbetrieb über Kugellager **11** gegenüber der Achse **12** abgestützt ist.

In ***Fig. 2a*** ist ein Schnitt durch den Reluktanzgenerator **2** und in **Fig. *2b*** ein Schnitt durch die Kontaktscheibe 7 des in Fig. 1 dargestellten Energiewandlersystems dargestellt.

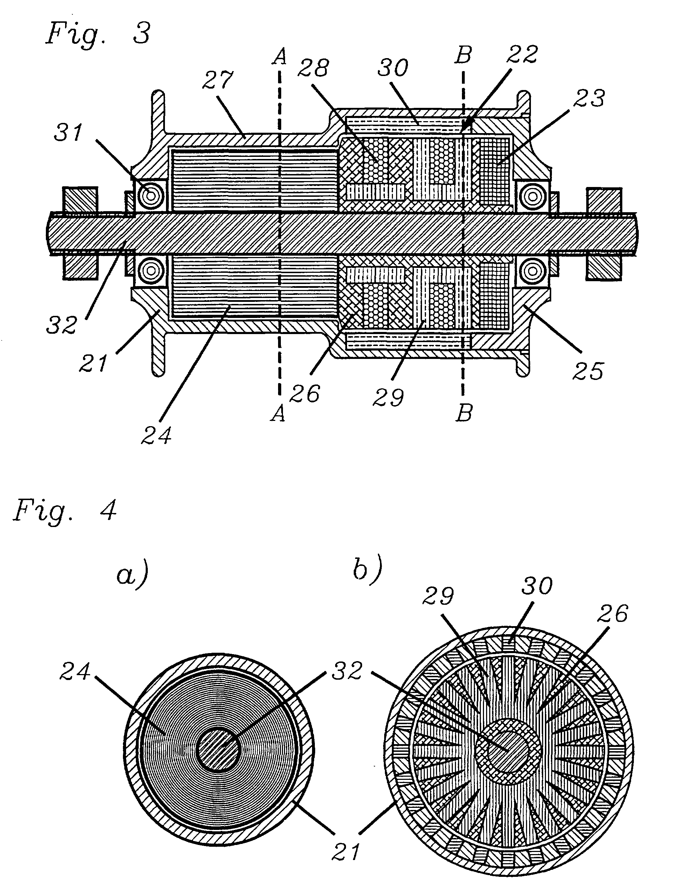

***Fig.* 3** zeigt ein ähnliches Energiewandlersystem, wobei in der Radnabe **21** neben dem Reluktanzgenerator **22** und der Elektronik **23** diesmal als Energiespeicher **24** ein hohlzylindrischer Kondensator eingebaut ist. Nach dem Öffnen des Nabendeckels **25** ist die Elektronik **23** direkt zugänglich, während der wartungsfreie Kondensator im zur Gewichtsersparnis verengten Teil **27** der Radnabe steckt. Der Reluktanzgenerator **22** ist in eine Vergußmasse **26** eingebettet und besteht aus zwei versetzt angeordneten, baugleichen Baugruppen, die wiederum aus jeweils einem Leiterring **28** und den ihn umgebenden weichmagnetischen Statorkörper **29** bestehen. Die Rotorsegmente **30** erstrecken sich über beide Phasen des Reluktanzgenerators **22** und sind fest in die verstärkte Nabenhälfte eingefügt. Lager **31** und Achse **32** können als konventionelle Komponenten zugekauft werden.

In ***Fig. 4a*** ist ein Schnitt durch den Hochleistungskondensator **24** und in ***Fig. 2b*** ein Schnitt durch den Reluktanzgenerator **22** des in Fig. 3 dargestellten Energiewandlersystems dargestellt.

## Patentansprüche

1. Mit einer Fahrzeug-Radnabe kombiniertes Energiewandlersystem, wobei das Energiewandlersystem aus einem in oder an der Radnabe angeordneten Generator, einem Energiespeicher und einer diese beiden verbindenden Elektronik besteht,
wobei der Generator als geschaltete Reluktanzmaschine (2, 22) ausgebildet ist, wobei die Reluktanzmaschine (2, 22) Leiterringe (8, 28) aufweist, die von drei Seiten vom weichmagnetischen Statorkörper (9, 29) eingeschossen sind, die Elektronik (3, 23) die Reluktanzmaschine ansteuert und zusammen mit dem elektrischen Energiespeicher (4, 24) ebenfalls in oder an der Radnabe (1, 21) angeordnet ist.

2. Kombiniertes Energiewandlersystem nach Anspruch 1,
wobei die Leiterringe durch radial außerhalb der Leiterringe angeordnete Luftspalte von den weichmagnetischen Rotorsegmenten (10, 30) getrennt sind, wobei die Rotorsegmente direkt mit der Radnabe (1, 21) verbunden sind.

3. Kombiniertes Energiewandfersystem nach Anspruch 1 oder 2,
wobei der elektrische Energiespeicher (4, 24) ein um die Radachse (32) angeordneter, hülsenförmiger Kondensator (24) ist.

4. Kombiniertes Energiewandlersystem nach Anspruch 1 bis 3,
wobei der Reluktanzgenerator (1, 21) in eine Gussmasse (5, 26) aus geschäumten Leichtmetall eingebettet ist, wobei der Gusskörper Aussparungen für die Montage der Elektronik (3, 23) und des Energiespeichers (4, 24) aufweist.

5. Verfahren zum Betrieb eines mit einer Fahrzeug-Radnabe kombinierten Energiewandlersystem, wobei das Energiewandlersystem aus einem in oder an der Radnabe angeordenten Generator, einem elektrischen Energiespeicher einer diese beiden verbindenden, den Ladezustand des Energiespeichers regelnden Elektronik besteht,
**gekennzeichnet durch** folgende Schritte:
beaufschlagen des als geschaltete Reluktanzmaschine (2, 22) ausgebildeten Generators mit von der Elektronik (3, 23) gelieferten Erregerimpulsen; und
bestimmen der Stärke der gelieferten Erregerimpulses **durch** die Elektronik (3, 23) in Abhängigkeit von dem Ladezustand des Energiespeichers (4, 24), dem momentanen Energieverbrauch und der Drehzahl.

6. Verwendung eines mit einer Fahrzeug-Radnabe kombinierten Energiewandlersystems nach einem der Ansprüche 1 bis 4.

## Claims

1. An energy conversion system combined with a vehicle wheel hub consisting of a generator arranged in or on the wheel hub, an energy accumulator, and power electroncis connecting said generator and energy accumulator, wherein said generator is designed as a switched reluctance generator (2, 22), said reluctance generator (2, 22) having conductor rings (8, 28) that are enclosed on three sides by soft magnetic stator bodies (9, 29), said power electronics (3, 23) is triggering said reluctance generator, and said reluctance generator together with said electric energy accumulator (4, 24) is also arranged in or on the vehicle wheel hub (1, 21).

2. Combined energy conversion system in accordance with claim 1,
wherein said conductor rings are separated from the soft magnetic rotor segments (10, 30) by air gaps arranged radially outside said conductor rings and said rotor segments are directly connected with said wheel hub (1, 21).

3. Combined energy conversion system in accordance with claim 1 or 2,
wherein the electric energy accumulator (4, 24) is designed as a sleeve-type capacitor (24) arranged around the axle of the wheel hub (32).

4. Combined energy conversion system in accordance with claims 1 to 3,
wherein the reluctance generator (1, 21) is embedded in a casting (5, 26) of foamed light metal, said casting possessing recesses to receive said power electronics (3, 23) and the energy accumulator (4, 24).

5. Process for the operation of such an energy conversion system combined with a vehicle wheel hub, said energy conversion system consisting of a generator arranged in or on the wheel hub, an electric energy accumulator, and power electronics connecting said generator with said energy accumulator and triggering the load status of said energy accumulator, **characterized by** the following steps:
supply of the generator which is designed as switched reluctance generator (2,22) with exciter impulses delivered by the power electronics (3, 23); and
determination of the power of said exciter impulses deliverd by said power electronics (3, 23) dependent on the load status of said energy accumulator (4, 24), the present energy consumption, and the rotational speed (rpm).

6. Use of an energy conversion system combined with a vehicle wheel hub in accordance with claims 1 to 4.

## Revendications

1. Système de transformation d'énergie combiné à un moyeu de roue de voiture lequel est composé d'un générateur placé dans ou sur le moyeu de la roue, d'un accumulateur d'énergie et d'une électronique les reliant, le générateur forme une machine à réluctance commutée (2, 22), ayant des anneaux disposés dans trois côtés du stator en matériaux ferromagnétiques doux, l'électronique (3, 23), pilotant la machine à réluctance, et l'accumulateur d'énergie (4, 24) sont également placé dans ou sur le moyeu de la roue (1, 21).

2. Système de transformation d'énergie selon la revendication 1 ,dans lequel les anneaux (8, 28) du générateur sont séparés des segments en matériaux ferromagnétiques doux du rotor (10, 30) par des entrefers positionnés radialement à l'extérieur des anneaux; dans lequel les segments du rotor sont directement reliés au moyeu de la roue (1, 21).

3. Système de transformation d'énergie selon les revendications 1 ou 2,
dans lequel l'accumulateur électrique d'énergie (4, 24) est un condensateur (24) en forme de manchon placé autour de l'axe de la roue (32).

4. Système de transformation d'énergie selon les revendications 1 à 3,
dans lequel le générateur à réluctance (1, 21 )est enrobé d'un corps moulé (5, 26) de métal léger expansé, ce corps présentant des évidements pour le montage de l'électronique (3, 23) et de l'accumulateur d'énergie (4, 24).

5. Procédé de fonctionnement d'un système de transformation d'énergie combiné à un moyeu de roue, composé d'un générateur formant une machine à réluctance commutée placé dans ou sur le moyeu de la roue, d'un accumulateur électrique d'énergie et d'une électronique les combinant et régulant la charge de l'accumulateur d'énergie, **caractérisé par** les étapes suivantes:
alimentation du générateur formant une machine à réluctance commutée (2, 22) à l'aide d'impulsions d'excitations délivrées par l'électronique (3, 23) ;
détermination de l'intensité des impulsions délivrées par l'électronique (3, 23) en fonction de la charge de l'accumulateur d'énergie (4, 24), de la consommation instantanée d'énergie et de la vitesse.

6. Application d'un transformateur d'énergie combiné à un moyeu de roue selon une des revendications 1 à 4.
